# EUROPÄISCHE PATENTSCHRIFT

(11) **EP 4 127 613 B1**
(45) Veröffentlichungstag und Bekanntmachung des Hinweises auf die Patenterteilung: **13.03.2024**
(21) Anmeldenummer: 20750648.6
(22) Anmeldetag: 31.07.2020
(51) Int. Cl.: G01F 11/00, A23G 9/28, B65D 83/00, B65B 3/18, B65B 29/00, B65B 39/04, G01F 13/00, A23G 9/04

(54) **ABGABEVORRICHTUNG FÜR EINE PORTIONIERUNGSANORDNUNG**
DISPENSING DEVICE FOR A PROPORTIONING APPARATUS
DISPENSATEUR POUR UN DISPOSITIF DE DOSAGE

(30) Priorität: 16.06.2020 DE 202020103440 U
(43) Veröffentlichungstag der Anmeldung: 08.02.2023
(73) Patentinhaber: RISCHEWSKI, Marc, 75210 Keltern (DE)
(72) Erfinder: RISCHEWSKI, Marc, 75210 Keltern (DE)
(74) Vertreter: Wacker, Jost Oliver
(86) Internationale Anmeldenummer: PCT/EP2020/071710
(87) Internationale Veröffentlichungsnummer: WO 2021/254647

(56) Entgegenhaltungen:
- EP-A1- 2 116 484
- DE-A1- 3 435 576
- US-A- 3 149 756
- US-A- 4 951 848
- US-A1- 2005 029 306
- US-A1- 2005 066 809
- US-A1- 2012 067 924

## Beschreibung

Die Erfindung betrifft eine Abgabevorrichtung für die Aufnahme beziehungsweise Zwischenspeicherung und Abgabe von Lebensmitteln nach dem Oberbegriff des Anspruchs 1. Die Abgabevorrichtung dient dabei zur Ausgabe eines fließfähigen, viskosen bis festen Lebensmittels an eine Dispenser- beziehungsweise Abfüllvorrichtung, wie zum Beispiel Speiseeis beziehungsweise spezielles Speiseeis, Sorbet, Glace, Eiscreme und insbesondere traditionell hergestelltes Speiseeis. Mittels der Dispenservorrichtung wird das Lebensmittel wiederum portioniert und die vordefinierten Portionen ausgegeben, wie beispielsweise zur anschließenden Verpackung oder Weiterverarbeitung. Die Abgabevorrichtung weist hierzu einen Aufnahmebehälter mit einer umlaufenden Behälterwandung zur Begrenzung eines Aufnahmeraumes auf. Der Aufnahmeraum ist dabei fließtechnisch mit einer Auslassöffnung verbunden, die wiederum für die Verbindung mit einem Ansauganschluss der Dispenservorrichtung vorgesehen ist. Dabei ist ein über den Aufnahmeraum hinweg verlagerbarer Schwimmdeckel vorgesehen, der auf dem im Aufnahmeraum gespeicherten Lebensmittel aufliegt. Durch diese schwimmende Auflage des Schwimmdeckels auf dem Lebensmittel wird dieses über den gesamten Querschnitt gleichmäßig verteilt und im Laufe der Abgabevorgänge gleichmäßig der Abgabeöffnung zugeführt. Dabei dichtet der Schwimmdeckel den jeweiligen, das Lebensmittel enthaltenden Abschnitt des Aufnahmeraums nach oben hin ab und verhindert dadurch die Ausbildung von Sogstrudeln und sonstigen luftführenden Vertiefungen oder Pfaden im Bereich der Abgabeöffnung. Vielmehr wird der Schwimmdeckel infolge des beim Absaugen erzeugten Unterdruckes zusammen mit dem Lebensmittel gerade oder schräg in vertikaler Richtung abgesenkt und sorgt dabei dafür, dass das Lebensmittel eine geschlossene Oberfläche sowie ein gleichmäßig kompaktes Volumen aufweist. Ferner weist der Schwimmdeckel eine Belüftungseinrichtung auf. Nur hierdurch ist nach Beendigung eines Abgabevorganges und insbesondere auch bei noch anliegendem Unterdruck ein Entfernen des Schwimmdeckels aus dem Aufnahmebehälter in komfortabler Weise möglich, um diesen neu befüllen oder reinigen zu können. Die Belüftungseinrichtung kann dabei beispielsweise durch ein Luftventil gebildet sein. Die Belüftungseinrichtung weist dabei ein Stellelement auf, das gegenüber einem Deckelgrundkörper zwischen einer Schließstellung, in der es eine Belüftungsöffnung verschließt, und einer Belüftungsstellung verstellbar ist, in der es die Belüftungsöffnung wenigstens teilweise freigibt.

DE102012105712A1 beschreibt eine mit einer trichterförmigen Abgabevorrichtung verbundene Lebensmittel-Dispenservorrichtung, beispielsweise zur Portionierung und Abgabe von Teigen, Suppen, Schlagsahnen oder Glasuren. Dabei wird das betreffende Lebensmittel mit einem ersten Arbeitshub eines Kolbens aus der Abgabevorrichtung in einen Zylinder eingesaugt und nach Umschalten eines Ventils mit einem zweiten Arbeitshub des Kolbens aus dem Zylinder zu einer Ausgabeöffnung befördert. Die besondere Form eines Ventilkörpers ermöglicht dabei einen besonders schonenden Transport des Lebensmittels.

Nachteilig an den bekannten, üblicherweise trichterförmigen Abgabevorrichtungen für derartige Dispenservorrichtungen ist dabei, dass es bei Lebensmitteln mit höherer Viskosität, wie insbesondere traditionell hergestelltem Speiseeis, während des Ansaughubes innerhalb des im Aufnahmeraum gespeicherten Lebensmittels zur Ausbildung einer trichterförmigen Vertiefung in Folge eines Sogstrudels kommt. In Abhängigkeit des Füllstandes der Abgabevorrichtung führt dies dazu, dass während des ersten Arbeitshubes teilweise Luft angesaugt wird, was wiederum zu Störungen und einer fehlerhaften Portionierung des Lebensmittels führen kann. Ferner besteht bei derartigen Portionierungsanordnungen ein Bedarf dahingehend, diese für die Portionierung möglichst vieler und unterschiedlicher Lebensmittel verwenden zu können, wie insbesondere von flüssigen und heißen Lebensmitteln bis hin zu stark viskosen und kalten Lebensmitteln, wie insbesondere mit einem Gefrierprozess hergestellten Lebensmitteln. Letztere sollen dabei in vielen Fällen, wie beispielsweise im Falle von traditionell hergestelltem Speiseeis, auch während der Portionierung eine Temperatur von -5 bis -12° C aufweisen, um eine bei der Herstellung erzielte verkettete Mikrokristallstruktur aufrechthalten zu können. Insbesondere kann bei diesen Temperaturen eine Rückkristallisation verhindert werden, bei der Makrokristalle aus gefrorenem Wasser entstehen, die durch ihre harte, scharfkantige Konsistenz zu einem unangenehmen Verzehr führen können. Vielmehr kann bei dem Temperaturbereich von -5 bis -12° C insbesondere auch bei relativ geringem Fettgehalt und geringem Luftaufschlag eine angenehme Textur des portionierten Speiseeises gewährleistet werden.

US 4,951,848 beschreibt eine Dispenserkartusche zu Ausgabe eines in einem Aufnahmezylinder aufgenommenen, pastösen bis niedrig viskosen Inhalts über eine Düse. Dabei ist ein schwimmend gehaltener Kolben vorgesehen, der oberseitig an den auszugebenden Inhalt anlegbar ist. Der Kolben weist dabei eine konisch geformte Unterseite auf, die sich nach oben zu einer Entlüftungsöffnung hin verjüngt. Die Entlüftungsöffnung weist eine Schraube auf, die mittels eines separaten Schraubendrehers zwischen einer Schließ- und einer Entlüftungsstellung verstellbar ist.

US 3,149,756 zeigt eine Dosier- und Ausgabevorrichtung für Eiscreme. Diese weist einen Aufnahmezylinder für die Eiscreme auf, der durch einen angetriebenen Dosierkolben über einen Auslass entleert werden kann. Der Dosierkolben ist dabei an einem Arbeitskolben gehalten, in Abhängigkeit von dessen Stellung der Aufnahmezylinder verschlossen oder entlüftet werden kann.

US 2012/0067924 A1 und DE 3435576 A1 beschreiben jeweils einen Applikator für pastöse Produkte. Dieser weist einen Aufnahmezylinder für das Produkt auf, an dessen oberen Ende eine Ausgabepumpe vorgesehen ist, durch deren Betätigung ein Kolben entlang des Aufnahmezylinders nach oben verlagerbar ist, um das Produkt einer Ausgabeöffnung der Ausgabepumpe zuzuführen.

US 2005/0029306 A1 beschreibt eine Dispenserkartusche zur präzisen Ausgabe eines in einem Aufnahmezylinder aufgenommenen, unterschiedlich viskosen Inhalts über eine Ausgabeöffnung. Dabei ist ein Kolben vorgesehen, der oberseitig an den auszugebenden Inhalt anlegbar ist. Der Kolben weist dabei eine konisch geformte Unterseite auf, die sich nach unten zu einer Entlüftungsöffnung hin verjüngt. Die Entlüftungsöffnung weist eine Schraube auf, die zwischen einer Schließ- und einer Entlüftungsstellung verstellbar ist.

EP 2116484 A1 zeigt eine Kartusche mit einem Kolben, der aus wenigstens zwei Kolbenteilen besteht. Ein erster Kolbenteil aus härterem Kunststoff dient dabei zum Ablösen eines Folienbeutels. Ein zweiter Kolbenteil aus elastischem Kunststoff dient dagegen zur hermetischen Abdichtung der Kartusche.

US 2005/0066809 A1 beschreibt eine Kartusche zur Aufnahme und Ausgabe eines pastösen Materials mittels eines Kolbens. Am Kolben ist dabei ein Entlüftungsventil vorgesehen, das durch ein elastisches Teil nach einer Entlüftung selbsttätig verschließbar ist.

Die Aufgabe der Erfindung ist es, bei einer gattungsgemäßen Abgabevorrichtung die genannten Nachteile zu vermeiden und unabhängig vom jeweiligen Füllstand und der Konsistenz des Lebensmittels eine sichere und gleichmäßige Abgabe zu gewährleisten, wie insbesondere bei traditionell hergestelltem Speiseeis in den verschiedensten Arten, was Fette und Luftaufschlag betrifft, wie beispielsweise Gelato, Sorbet, Glace und Eiscreme und insbesondere mit einem geringen Anteil an Fett und einem geringen Luftaufschlag. Zudem ist es Aufgabe der Erfindung, ein sicheres Umschalten zwischen der abdichtenden Schließstellung zur Durchführung eines Abgabevorganges und der Belüftungsstellung zur Entfernung des Schwimmdeckels zu ermöglichen und bei einer Portionierungsanordnung unabhängig von der Temperatur und der Viskosität des Lebensmittels eine sichere, gleichmäßige und exakte Portionierung zu gewährleisten und ein störungsfreies Umschalten zwischen Ansaug- und Ausgabebetrieb sicherzustellen.

Diese Aufgabe wird durch eine Abgabevorrichtung mit den Merkmalen des Anspruchs 1 gelöst. Dabei ist es günstig, wenn das Stellelement über eine Schraubverbindung am Deckelgrundkörper gehalten und über eine Handhabe zwischen der Schließstellung und der Belüftungsstellung verdrehbar ist, die durch einen Haltegriff des Schwimmdeckels gebildet ist. Hierdurch kann eine besonders exakte und stabile Führung des Stellelementes gegenüber dem Deckelgrundkörper gewährleistet werden. Zudem muss für die Verlagerung des Stellelementes und die Entnahme des Schwimmdeckels aus dem Aufnahmebehälter hierdurch lediglich ein einziges Element vorgesehen werden.

In einer besonders vorteilhaften Ausführungsform ist der Schwimmdeckel über die gesamte Längserstreckung beziehungsweise Höhe der Behälterwandung gerade oder schräg in vertikaler Richtung verlagerbar, so dass das gesamte Speichervolumen des Aufnahmeraums vom sich absenkenden Schwimmdeckel durchlaufen werden kann, um eine gleichmäßige und vollständige Entleerung zu erzielen.

Dabei ist es günstig, wenn die Behälterwandung zylinderförmig und der Schwimmdeckel kreisförmig ausgebildet ist, um eine besonders einfache und gleichmäßige umlaufende Abdichtung des Schwimmdeckels entlang der Behälterwandung herstellen zu können, wie beispielsweise mittels wenigstens eines Dichtungsringes. Alternativ hierzu können die Behälterwandung und der Schwimmdeckel auch jede andere bekannte Form aufweisen, sofern sie form- und größenmäßig aufeinander abgestimmt sind, wie beispielsweise eine ovale beziehungsweise elliptische oder mehreckige Form.

Vorteilhafterweise ist der Aufnahmeraum nach unten durch einen flachen Behälterboden begrenzt, an den der Schwimmdeckel anlegbar ist, um eine vollständige Entleerung mithilfe des Schwimmdeckels zu ermöglichen. Dabei ist es günstig, wenn die Auslassöffnung exzentrisch in den Behälterboden eingelassen ist, um die Abgabevorrichtung gegenüber der Dispenservorrichtung in verschiedene Schwenkstellungen fixieren zu können. Hierdurch kann die Abgabevorrichtung beispielsweise beim Befüllen je nach Arbeitsumgebung beziehungsweise je nach konstruktiver Ausgestaltung einer Herstellungsanlage, aus der befüllt wird, wie beispielsweise einer Eismaschine, in einer bevorzugten Schwenkstellung gegenüber der Dispenservorrichtung positioniert werden. Alternativ hierzu ist jedoch auch eine zentrische beziehungsweise jede sonstige bodennahe Anordnung der Auslassöffnung möglich.

Vorteilhafterweise weist der Schwimmdeckel am Deckelrand umlaufende erste Dichtungsmittel für die Anlage an der Behälterwandung auf, um beim Absaugen des Lebensmittels den Eintritt von Luft zu vermeiden und dadurch ein dichtes und gleichmäßiges Nachführen des Schwimmdeckels am abnehmenden Pegel des Lebensmittels zu gewährleisten.

Dabei ist es besonders günstig, wenn die ersten Dichtungsmittel wenigstens zwei parallel angeordnete Dichtungsringe aufweisen, wodurch sich der Schwimmdeckel auch während einer Absenkbewegung im Wesentlichen senkrecht zur Behälterwandung an dieser abstützen kann und auf diese Weise zwangsgeführt ist.

In einer weiteren vorteilhaften Ausführungsform weisen die die ersten Dichtungsmittel wenigstens einen Dichtungsring mit einem Kreuzprofil auf, wodurch eine besonders stabile Abstützung an der Behälterwandung erzielt werden kann. Alternativ hierzu kann das Profil des Dichtungsringes auch jede sonstige bekannte und geeignete Form aufweisen, wie beispielsweise ein Rund- oder Mehrkantprofil. Zudem kann das Profil sowohl als Hohlprofil als auch als Vollprofil ausgebildet sein.

Zudem weist der Schwimmdeckel am Rand neben den Dichtungsmitteln mindestens drei zueinander beabstandete und dabei umlaufend angeordnete Randerhebungen auf, die bei einer vordefinierten Schräglage des Schwimmdeckels gegenüber der Behälterwandung mit dieser in Anlage kommen. Über diese Randerhebungen wird der Schwimmdeckel somit bei Erreichen der vorbestimmten Schräglage an der Behälterwandung abgestützt und dadurch ein weitergehendes Verkippen des Schwimmdeckels verhindert.

In einer vorteilhaften Ausführungsform ist der Schwimmdeckel an seiner Oberseite mit einem Überdruck beaufschlagbar, um an der Oberseite des Schwimmdeckels das abzugebende Lebensmittel mit einem bestimmten Auspressdruck beaufschlagen zu können und dadurch am Schwimmdeckel einen, beispielsweise regelbaren Vorschub erzeugen zu können. Dabei kann der Überdruck an der Oberseite des Schwimmdeckels beispielsweise über ein Druckluftventil oder eine elektrische/elektronische Steuerungseinrichtung produktspezifisch angepasst beziehungsweise konstant gehalten werden. Dabei wird der Schwimmdeckel in eine Art Schwebezustand versetzt, die eine leichtere Ausgabe des Produktes begünstigt. Auf diese Weise kann auch ein Lebensmittel mit einer besonders hohen Viskosität beziehungsweise einer relativ festen Konsistenz störungsfrei und gleichmäßig an die Dispenservorrichtung abgegeben werden, wie beispielsweise traditionell hergestelltes Speiseeis mit einem Fettanteil von weniger als 7 % und einem Luftaufschlag von weniger als 30 %. Außerdem kann der Austritt von Lebensmittel zwischen dem Schwimmdeckel und der Behälterwandung hierdurch vollständig ausgeschlossen werden.

Zudem ist es günstig, wenn der Schwimmdeckel aus einem thermoplastischen Kunststoff, wie beispielsweise Polyoxymethylen (POM) hergestellt ist, um eine präzise und kostengünstige Herstellung des Schwimmdeckels bei gleichzeitig hoher Formstabilität ermöglichen zu können. Alternativ hierzu kann der Schwimmdeckel jedoch auch aus jedem anderen bekannten und geeigneten Material gebildet sein, wie beispielsweise Edelstahl.

Ferner wird die oben genannte Aufgabe durch eine Portionierungsanordnung für die Portionierung eines durch einen Gefrierprozess hergestellten viskosen bis festen Lebensmittels gelöst, die eine Abgabevorrichtung in einer der oben genannten Ausführungsformen sowie eine Dispenservorrichtung aufweist, die einen Portionierungszylinder, ein Umschaltventil mit einem gegenüber einem Ventilgehäuse unter Zwischenlage von zweiten Dichtungsmitteln verlagerbaren Ventilkörper, eine mit der Auslassöffnung verbundene Ansaugöffnung und eine Ausgabeöffnung für die Abgabe des portionierten Lebensmittels aufweist, wobei der Portionierzylinder über einen Kolben mit einem Ansaugdruck und einem Überdruck beaufschlagbar ist und eine Arbeitsöffnung aufweist, die in einer Ansaugstellung des Ventilkörpers mit der Ansaugöffnung und in einer Ausgabestellung mit der Ausgabeöffnung verbindbar ist. Dabei sind die ersten Dichtungsmittel und die zweiten Dichtungsmittel wenigstens teilweise aus Silikon hergestellt. Durch die hohe Dauerwärmebeständigkeit und den sehr niedrigen Stockpunkt von Silikon weisen die hieraus hergestellten Dichtungsmittel bei den an der Portionierungsanordnung in Folge der zu portionierenden Lebensmittel auftretenden Temperaturen im Bereich von 100°C bis -15°C relativ gleichbleibende Materialeigenschaften und somit ein im Wesentlichen gleichbleibendes Dicht- und Lagerverhalten auf. Hierdurch kann die Portionierungsanordnung für die Portionierung sehr unterschiedlicher Lebensmittel verwendet werden, die von kochend heißen Lebensmitteln, wie beispielsweise Suppen, bis zu in einem Gefrierprozess hergestellten viskosen bis festen Lebensmitteln reichen, wie Speiseeis beziehungsweise spezielles Speiseeis, Sorbet, Glace, Eiscreme und insbesondere traditionell hergestelltes Speiseeis mit einer Temperatur von -5 bis -12°C. Durch die Portionierung bei diesen niedrigen Temperaturen kann die bei der Herstellung erzielte verkettete Mikrokristallstruktur des jeweiligen Speiseeises aufrechterhalten werden, wodurch wiederum eine gewünschte Textur gewährleistet werden kann. Dabei weisen die ersten Dichtungsmittel vorzugsweise wenigstens einen vollständig aus Silikon hergestellten Dichtungsring auf. Hierdurch dichtet der Schwimmdeckel den jeweiligen, das Lebensmittel enthaltenden Abschnitt des Aufnahmeraums unabhängig von der jeweiligen Temperatur des Lebensmittels zuverlässig nach oben hin ab und verhindert dadurch die Ausbildung von Sogstrudeln und sonstigen luftführenden Vertiefungen oder Pfaden im Bereich der Auslassöffnung. Der Schwimmdeckel wird somit infolge des beim Absaugen erzeugten Unterdruckes zusammen mit dem Lebensmittel gerade oder schräg in vertikaler Richtung abgesenkt und sorgt dabei dafür, dass das Lebensmittel eine geschlossene Oberfläche sowie ein gleichmäßig kompaktes Volumen aufweist. Vorteilhafterweise weisen die ersten Dichtungsmittel wenigstens zwei parallel angeordnete Dichtungsringe aus Silikon auf, wodurch sich der Schwimmdeckel auch während einer Absenkbewegung im Wesentlichen senkrecht zur Behälterwandung an dieser abstützen kann und auf diese Weise zwangsgeführt ist. Zudem ist es günstig, wenn die Dichtungsmittel aus Silikon wenigstens einen Dichtungsring mit einem Kreuzprofil aufweisen, wodurch unabhängig von der jeweiligen Temperatur des zu portionierenden Lebensmittels eine besonders stabile Abstützung an der Behälterwandung erzielt werden kann. Alternativ hierzu kann das Profil des Dichtungsringes auch jede sonstige bekannte und geeignete Form aufweisen, wie beispielsweise ein Rund- oder Mehrkantprofil. Zudem kann das Profil sowohl als Hohlprofil als auch als Vollprofil ausgebildet sein.

Vorteilhafterweise weisen auch die zweiten Dichtungsmittel am Ventilkörper wenigstens ein umlaufendes und mehrfach gekrümmtes Dichtungselement auf, das vollständig aus Silikon hergestellt ist. Durch die mehrfache Krümmung kann das aus Silikon hergestellte Dichtungselement den Ventilkörper auch in einem Bereich mit größeren Materialausnehmungen zur Durchleitung des zu portionierenden Lebensmittels umlaufend gegenüber dem Ventilgehäuse abdichten. Zudem ist der Ventilkörper hierdurch gegenüber dem Ventilgehäuse unabhängig von der jeweiligen Temperatur des Lebensmittels gleichbleibend stabil gelagert, so dass das Umschaltventil unabhängig von dem jeweils zu portionierenden Lebensmittel störungsfrei und mit annähernd gleichbleibenden Kräften beziehungsweise Drehmomenten zwischen der Ansaugstellung und der Abgabestellung umgeschaltet werden kann.

Ferner ist es günstig, wenn die zweiten Dichtungsmittel wenigstens einen vollständig aus Silikon hergestellten Dichtungsring aufweisen, der den Ventilkörper kreisförmig umschließt und dadurch eine zweite, besonders zuverlässige Abdichtung gegenüber dem Ventilgehäuse gewährleistet.

Zudem ist es günstig, wenn die Auslassöffnung der Abgabevorrichtung und der damit verbundenen Ansauganschluss der Dispenservorrichtung aus Edelstahl hergestellt sind, um nach einem Abgabevorgang eine einfache und vollständige Reinigung zu ermöglichen.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Explosionsansicht einer Portionierungsanordnung,
- Figur 2: eine Abgabevorrichtung der Portionierungsanordnung nach Figur 1 in einer Ausgangsstellung,
- Figur 3: die Abgabevorrichtung nach Figur 2 in einer Endstellung,
- Figur 4: einen Schwimmdeckel der Abgabevorrichtung nach Figur 2 in einer Schließstellung,
- Figur 5: einen Schwimmdeckel der Abgabevorrichtung nach Figur 2 in einer Belüftungsstellung.
- Figur 6: eine Draufsicht auf die Portionierungsanordnung in einer Saugstellung und
- Figur 7: eine Draufsicht auf die Portionierungsanordnung in einer Ausgabestellung.

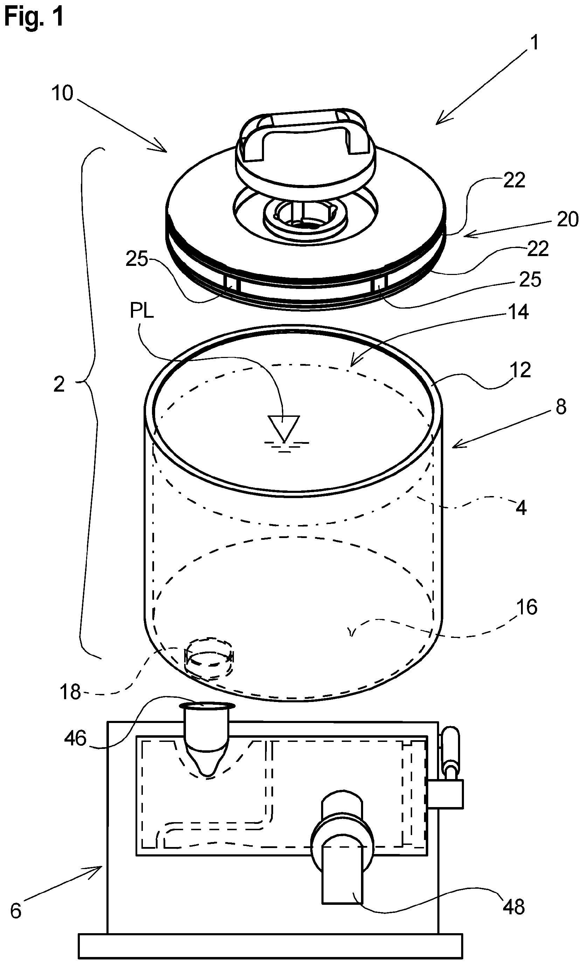

Fig. 1 zeigt eine Portionierungsanordnung 1 mit einer Abgabevorrichtung 2 für die Aufnahme beziehungsweise Zwischenspeicherung eines Lebensmittels 4, wie insbesondere Speiseeis, das mittels einer Dispenservorrichtung 6, beziehungsweise einer Abfülleinrichtung in vorbestimmten Mengen portioniert und anschließend ausgegeben wird.

Die Abgabevorrichtung 2 weist einen Aufnahmebehälter 8 sowie einen darin einsetzbaren Schwimmdeckel 10 auf, der beispielsweise aus Polyoxymethylen (POM), Edelstahl oder einem anderen geeigneten Material hergestellt ist. Der Aufnahmebehälter 8 umfasst dabei eine zylindrische Behälterwandung 12, die einen Aufnahmeraum 14 für das Lebensmittel 4 begrenzt. Der Schwimmdeckel 10 ist kreisförmig ausgebildet und größenmäßig derart an den Aufnahmebehälter 8 angepasst, dass er in vertikaler Richtung über den Aufnahmeraum 14 hinweg in Richtung eines Behälterbodens 16 verlagert werden kann.

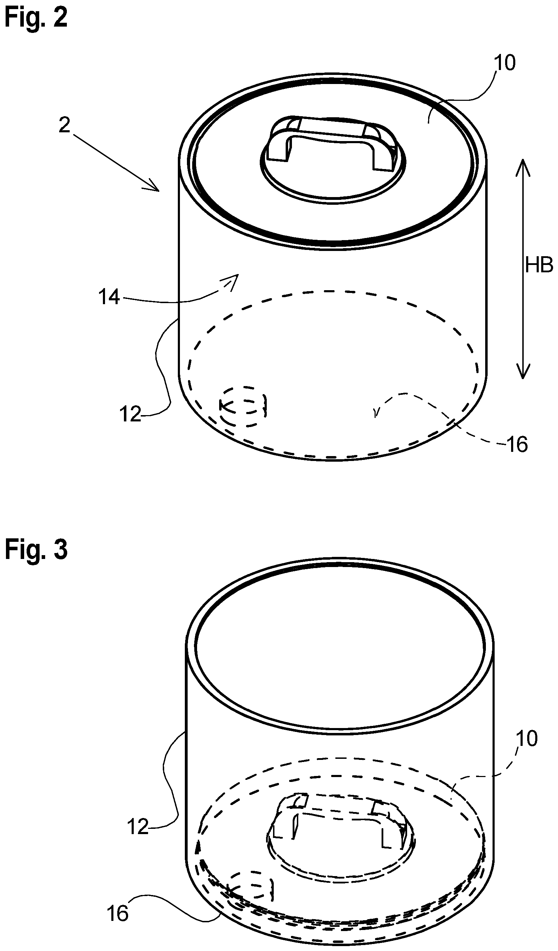

In den Behälterboden 16 ist eine Auslassöffnung 18 eingelassen, über die das Lebensmittel 4 an die Dispenservorrichtung 6 abgegeben werden kann. Die Auslassöffnung 18 kann hierzu, wie dargestellt, exzentrisch oder alternativ dazu auch zentrisch am Behälterboden 16 angeordnet sein. Um eine im Wesentlichen vollständige Entleerung des Aufnahmeraums 14 gewährleisten zu können, ist der Schwimmdeckel 10 in jedem Fall über die gesamte Längserstreckung beziehungsweise Höhe HB der Behälterwandung 12 verlagerbar und an den Behälterboden 16 anlegbar, wie aus den Figuren 2 und 3 zu entnehmen ist.

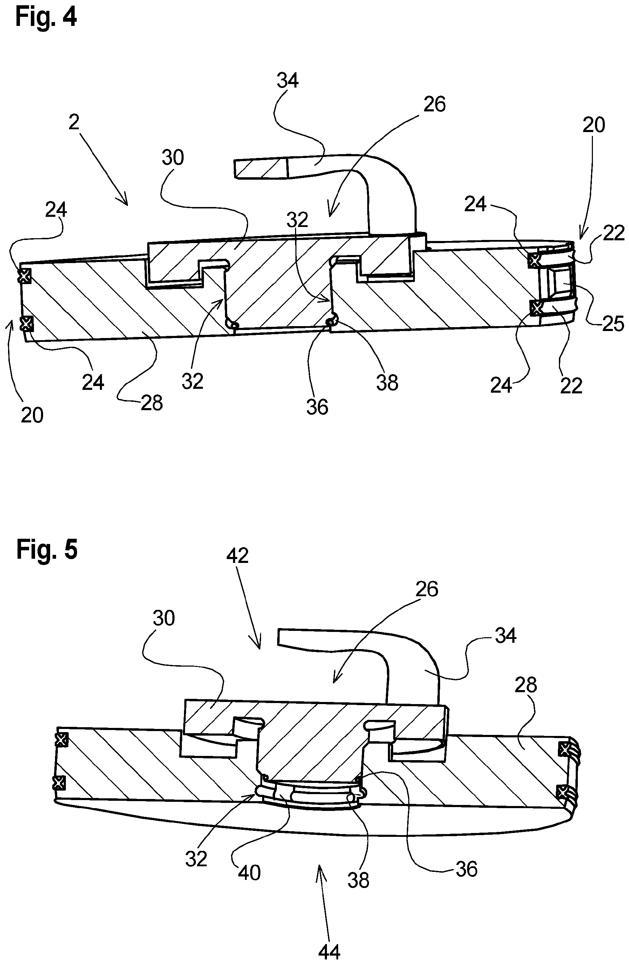

Für die umlaufend abdichtende Anlage des Schwimmdeckels 10 an der Behälterwandung 12 weist dieser, wie insbesondere aus den Figuren 4 und 5 zu entnehmen ist, an seinem Rand erste Dichtungsmittel 20 auf, die beispielsweise zwei zueinander parallel angeordnete Dichtungsringe 22 umfassen. Dadurch wird beim vertikalen Absenken eine Art Zwangsführung des Schwimmdeckels 10 erzielt, durch die dieser vertikal zur Behälterwandung 12 beziehungsweise in einer horizontalen Lage gehalten wird. Um hierbei eine besonders stabile Führung und sichere Abdichtung gewährleisten zu können, weisen die Dichtungsringe 22 bevorzugterweise ein Kreuzprofil 24 auf. Alternativ hierzu können die Dichtungsringe 22 jedoch auch jedes andere bekannte und geeignete Profil aufweisen, wie beispielsweise ein kreis- oder ellipsenförmiges oder ein Mehreck-Profil.

Die Dichtungsringe 22 sind dabei wenigstens teilweise, vorzugsweise vollständig aus Silikon hergestellt, wodurch sie im Temperaturbereich von 100°C bis -15°C im Wesentlichen gleichbleibende Materialeigenschaften aufweisen. Somit kann bei der Portionierung von kochend heißen Lebensmitteln, wie beispielsweise Suppen, bis zu in einem Gefrierprozess hergestellten viskosen bis festen Lebensmitteln, wie Speiseeis beziehungsweise spezielles Speiseeis, Sorbet, Glace, Eiscreme und insbesondere traditionell hergestelltes Speiseeis, und den hierbei am Aufnahmebehälter 8 auftretenden Temperaturen ein im Wesentlichen gleichbleibendes Dicht- und Lagerverhalten der Dichtungsringe 22 gewährleistet werden.

Zudem weist der Schwimmdeckel 10 am Rand neben den Dichtungsmitteln 20 mindestens drei, vorzugsweise fünf bis sieben umlaufend angeordnete Randerhebungen 25 auf, die bei einer vordefinierten Schräglage des Schwimmdeckels 10 gegenüber der Behälterwandung 12 mit dieser in Anlage kommen. Die Randerhebungen 25 können sich dabei jeweils zwischen den Dichtungsmitteln 20 und bis zum oberseitigen und/oder unterseitigen Randabschluss erstrecken, wie aus Figur 4 zu entnehmen ist. Über diese Randerhebungen 25 wird der Schwimmdeckel 10 somit bei Erreichen der vorbestimmten Schräglage an der Behälterwandung 12 abgestützt, wodurch ein weitergehendes Verkippen verhindert werden kann.

Zudem weist der Schwimmdeckel 10 eine Belüftungseinrichtung 26 auf, um diesen auch aus einem angesaugten Zustand heraus beziehungsweise aus der Endstellung am Behälterboden 16 aus dem Aufnahmebehälter 8 entnehmen zu können. Hierzu ist der Schwimmdeckel 10 wenigstens zweiteilig ausgebildet und weist einen Deckelgrundkörper 28 und ein gegenüber diesem verstellbares Stellelement 30 auf. Das Stellelement 30 ist dabei über eine Schraubverbindung 32 mit dem Deckelgrundkörper 28 verbunden und mittels einer Handhabe 34 verdrehbar, die gleichzeitig einen Haltegriff des Schwimmdeckels 10 bildet.

Figur 4 zeigt den Schwimmdeckel 10 in einer Schließstellung, in der das Stellelement 30 vollständig in den Deckelgrundkörper 28 eingedreht ist und diesen dicht verschließt. Hierzu liegt beispielsweise eine Stellelementdichtung 36 des Stellelementes 30 in Form eines ebenfalls vorzugsweise aus Silikon hergestellten O-Ringes umlaufend an einem Dichtungssitz 38 des Deckelgrundkörpers 28 an.

Durch Verdrehen des Stellelementes 30 mittels der Handhabe 34 wird dieses gegenüber dem Deckelgrundkörper 28 in die in Figur 5 dargestellte Belüftungsstellung verbracht. In dieser ist die Stellelementdichtung 36 beabstandet zum Dichtungssitz 38 gehalten und gibt dabei eine Belüftungsöffnung 40 frei, über die eine Belüftungsverbindung zwischen einer Oberseite 42 und einer Unterseite 44 des Schwimmdeckels 10 herstellbar ist. Alternativ zu der dargestellten Ausführungsform kann die Belüftungseinrichtung 26 jedoch auch durch jede andere bekannte und geeignete Ventilart gebildet sein.

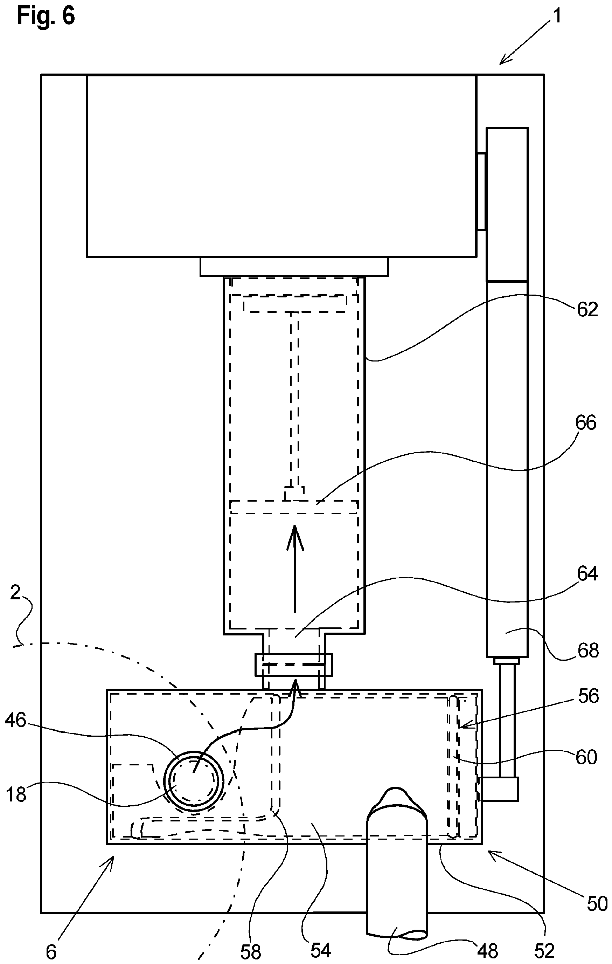

Die Dispenservorrichtung 6 der Portionierungsanordnung 1 weist, wie aus Figur 6 zu entnehmen ist, eine mit der Auslassöffnung 18 verbindbare Ansaugöffnung 46 auf, die an einem Ventilgehäuse 52 eines Umschaltventils 50 vorgesehen ist. In diesem ist ein verlagerbarer beziehungsweise verdrehbarer Ventilkörper 54 vorgesehen, der unter Zwischenlage von zweiten Dichtungsmitteln 56 an dem Ventilgehäuse 52 anliegt. Die zweiten Dichtungsmittel 56 weisen hierzu ein mehrfach gekrümmtes und den Ventilkörper 54 umschließendes Dichtungselement 58 sowie einen hierzu beabstandeten kreisförmigen Dichtungsring 60 auf. Das mehrfach gekrümmte Dichtungselement 58 und der kreisförmige Dichtungsring 60 sind dabei wenigstens teilweise, vorzugsweise vollständig aus Silikon hergestellt, um unabhängig von der jeweiligen Temperatur des zu portionierenden Lebensmittels ein im Wesentlichen gleichbleibendes Dicht- und Lagerverhalten auch der zweiten Dichtungsmittel 56 gewährleisten zu können.

Zudem weist die Dispenservorrichtung 6 einen Portionierungszylinder 62 auf, der über eine Arbeitsöffnung 64 und das Umschaltventil 50 wahlweise mit der Ansaugöffnung 46 oder mit einer Ausgabeöffnung 48 des Ventilgehäuses 52 verbunden werden kann.

Zum Betrieb der Portionierungsanordnung 1 nach Figur 1, wie insbesondere zur Portionierung von traditionell hergestelltem Speiseeis, Sorbet oder Ähnlichem, wird zunächst die Auslassöffnung 18 des Aufnahmebehälters 8 mit dem Ansauganschluss 46 der Dispenservorrichtung 6 verbunden. Durch die exzentrische Position der Auslassöffnung 18 kann der Aufnahmebehälter 8 dabei in einer günstigen Position gegenüber der Dispenservorrichtung 6 fixiert werden, um beispielsweise ein störungsfreies Befüllen aus einer Eismaschine heraus zu ermöglichen. Vorzugsweise sind sowohl die Auslassöffnung 18 als auch der Ansauganschluss 46, beziehungsweise der Aufnahmebehälter 8 und die Dispenservorrichtung 6 insgesamt aus Edelstahl hergestellt. Dadurch kann auch bei der Verarbeitung sensibler Lebensmittel eine vollständige Reinigung und keimfreie Verarbeitung gewährleistet werden. Alternativ oder zusätzlich hierzu kann hierbei neben Edelstahl auch jedes andere bekannte und geeignete Material verwendet werden.

Anschließend wird der Aufnahmeraum 14 des Aufnahmebehälters 8 mit dem zu portionierenden Lebensmittel 4, beziehungsweise mit dem Speiseeis befüllt. Hiernach wird der Schwimmdeckel 10 an die Oberseite beziehungsweise den Pegel PL des Lebensmittels 4 angelegt, wobei sich der Schwimmdeckel 10 über erste Dichtungsmittel 20 an der Behälterwandung abstützt und der Aufnahmeraum14 dadurch nach außen hin abgedichtet wird.

Bei Inbetriebnahme der Dispenservorrichtung 6 wird dann über den Ansauganschluss 46 wiederkehren eine vordefinierte Menge des Lebensmittels 4 angesaugt und über die Ausgabeöffnung 48 der Dispenservorrichtung 6 ausgegeben, wie beispielsweise zur Verpackung, zur Weiterverarbeitung oder zum Verzehr.

Hierzu kann der Portionierungszylinder 62 über einen Kolben 66 mit einem Ansaugunterdruck beaufschlagt werden, um in der in Figur 6 dargestellten Ansaugstellung des Ventilkörpers 54 eine vorbestimmte Menge des zu portionierenden Lebensmittels in den Portionierungszylinder 62 einzusaugen. Die Portionsmenge kann hierbei beispielsweise durch die Einstellung eines Kolbenhubes festgelegt werden.

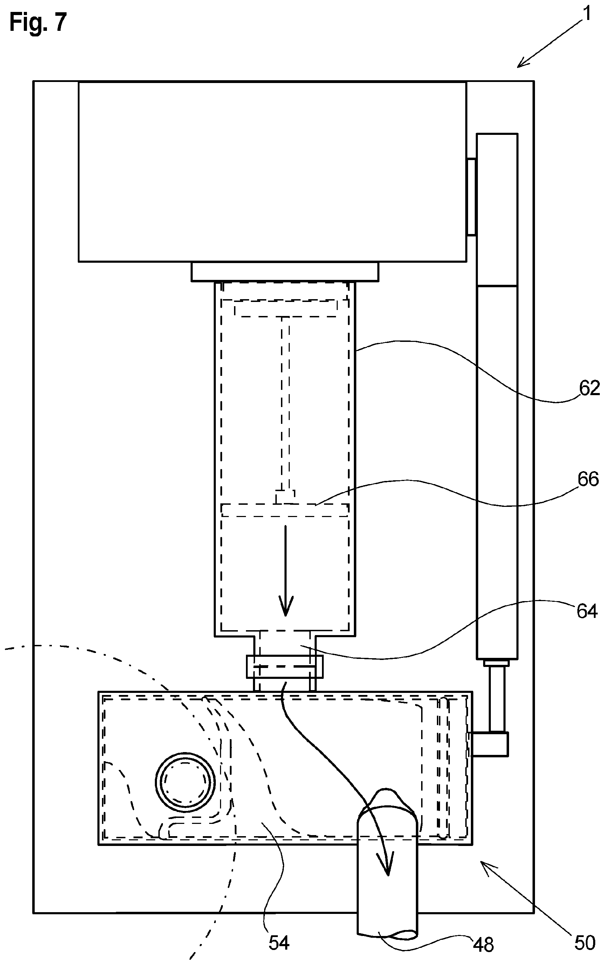

Durch eine Stelleinrichtung 68 kann der Ventilkörper 54 dann in eine Ausgabestellung gemäß Figur 7 verdreht werden, in der der Portionierungszylinder 62 über die Arbeitsöffnung 64 und das Umschaltventil 50 mit der Ausgabeöffnung 48 des Ventilgehäuses 52 verbunden ist. In dieser Ausgabestellung kann der Portionierungszylinder 62 nun über den Kolben 66 mit einem Überdruck beaufschlagt werden, um die vorbestimmte Menge des zu portionierenden Lebensmittels über die Ausgabeöffnung 48 auszugeben.

Durch die wiederkehrende Ausgabe des Lebensmittels 4 an der Auslassöffnung 18 sinkt der Pegel PL des Lebensmittels 4 zunehmend ab, wodurch der Schwimmdeckel 10 von der Ausgangsposition gemäß Figur 2 in die Endposition gemäß Figur 3 verlagert wird, in der er am Behälterboden 16 anliegt. Während dieser vertikalen Bewegung des Schwimmdeckels 10 sorgt dieser für eine geschlossene und gleichmäßige Verteilung des Lebensmittels 4 und für dessen Abdichtung nach außen. Auf diese Weise kann die Ausbildung von luftführenden Vertiefungen, wie beispielsweise durch Strudelbildung während des Absaugens, verhindert werden. Hierdurch werden wiederum Störungen beim Ansaugen und Portionieren des Lebensmittels vermieden.

Zusätzlich zu der dargestellten Ausführungsform der Abgabevorrichtung 2 wäre es dabei auch möglich, den Schwimmdeckel 10 mit einer Vortriebskraft in Richtung des Behälterbodens 16 zu beaufschlagen. Auf diese Weise kann beispielsweise auch Speiseeis mit einer sehr hohen Viskosität beziehungsweise mit einer festen Konsistenz störungsfrei ausgegeben werden, wie beispielsweise Speiseeis mit einem Fettgehalt von unter 7% und einem Luftaufschlag von weniger als 30%. Die Kraftbeaufschlagung kann dabei beispielsweise mittels einer Federeinrichtung oder mittels Druckluft erfolgen (nicht dargestellt).

Um den Schwimmdeckel 10 aus der Endposition gemäß Figur 3 entfernen zu können, wie insbesondere bei noch anliegendem Unterdruck durch die Dispenservorrichtung 6, wird das Stellelement 30 von der Schließstellung gemäß Figur 4 in die Belüftungsstellung gemäß Figur 5 verdreht. Anschließend kann der Schwimmdeckel 10 problemlos aus dem Aufnahmebehälter 8 entnommen werden, um diesen reinigen oder neu befüllen zu können.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Abgabevorrichtung (2) für die Aufnahme und Abgabe eines Lebensmittels (4) zu einer Dispenservorrichtung (6)
mit einem Aufnahmebehälter (8), der eine umlaufende Behälterwandung (12) zur Begrenzung eines Aufnahmeraumes (14) aufweist,
einer mit dem Aufnahmeraum (14) verbundenen Auslassöffnung (18) für die Verbindung mit einem Ansauganschluss (46) der Dispenservorrichtung (6),
einem über den Aufnahmeraum (14) hinweg verlagerbaren Schwimmdeckel (10),
der eine Belüftungseinrichtung (26) aufweist, die wiederum ein Stellelement (30) aufweist, das zwischen einer Schließstellung, in der es eine Belüftungsöffnung (40) verschließt, und einer Belüftungsstellung, in der es die Belüftungsöffnung (40) wenigstens teilweise freigibt, gegenüber einem Deckelgrundkörper (28) verstellbar ist,
**dadurch gekennzeichnet, dass** das Stellelement (30) über eine Schraubverbindung (32) am Deckelgrundkörper (28) gehalten und über eine durch einen Haltegriff des Schwimmdeckels (10) gebildete Handhabe (34) zwischen der Schließstellung und der Belüftungsstellung verdrehbar ist.

2. Abgabevorrichtung nach Anspruch 1, **dadurch gekennzeichnet, dass** der Schwimmdeckel (10) über die gesamte Längserstreckung der Behälterwandung (12) vertikal verlagerbar ist.

3. Abgabevorrichtung nach Anspruch 1 oder 2, **dadurch gekennzeichnet, dass** die Behälterwandung (12) zylinderförmig und der Schwimmdeckel (10) kreisförmig ausgebildet ist.

4. Abgabevorrichtung nach einem der Ansprüche 1 bis 3, **dadurch gekennzeichnet, dass** der Aufnahmeraum (14) nach unten durch einen flachen Behälterboden (16) begrenzt ist, an den der Schwimmdeckel (10) anlegbar ist.

5. Abgabevorrichtung nach einem der Ansprüche 1 bis 4, **dadurch gekennzeichnet, dass** der Schwimmdeckel (10) am Rand umlaufende erste Dichtungsmittel (20) für die Anlage an der Behälterwandung (12) aufweist.

6. Abgabevorrichtung nach Anspruch 5, **dadurch gekennzeichnet, dass** die ersten Dichtungsmittel (20) wenigstens zwei parallel angeordnete Dichtungsringe (22) aufweisen.

7. Abgabevorrichtung nach Anspruch 5 oder 6, **dadurch gekennzeichnet, dass** die ersten Dichtungsmittel (20) wenigstens einen Dichtungsring (22) mit einem Kreuzprofil (24) aufweisen.

8. Abgabevorrichtung nach einem der Ansprüche 5 bis 7, **dadurch gekennzeichnet, dass** der Schwimmdeckel (10) am Rand neben den Dichtungsmitteln (20) mehrere umlaufend angeordnete Randerhebungen (25) aufweist, die bei einer vordefinierten Schräglage des Schwimmdeckels (10) gegenüber der Behälterwandung (12) mit dieser in Anlage kommen.

9. Abgabevorrichtung nach einem der Ansprüche 1 bis 8, **dadurch gekennzeichnet, dass** der Schwimmdeckel (10) an einer Oberseite (42) mit einem Überdruck beaufschlagbar ist.

10. Abgabevorrichtung nach einem der Ansprüche 1 bis 9, **dadurch gekennzeichnet, dass** der Schwimmdeckel (10) aus einem thermoplastischen Kunststoff, wie beispielsweise Polyoxymethylen (POM) hergestellt ist.

11. Portionierungsanordnung (1) für die Portionierung eines durch einen Gefrierprozess hergestellten, viskosen bis festen Lebensmittels
mit einer Abgabevorrichtung (2) nach einem der Ansprüche 1 bis 10 für die Aufnahme und Abgabe des Lebensmittels (4) zur Dispenservorrichtung (6)
und mit einer Dispenservorrichtung (6), die einen Portionierungszylinder (62), ein Umschaltventil (50) mit einem gegenüber einem Ventilgehäuse (52) unter Zwischenlage von zweiten Dichtungsmitteln (56) verlagerbaren Ventilkörper (54), eine mit der Auslassöffnung (18) verbundene Ansaugöffnung (46) und eine Ausgabeöffnung (48) für die Abgabe des portionierten Lebensmittels aufweist,
wobei der Portionierzylinder (62) über einen Kolben (66) mit einem Ansaugdruck und einem Überdruck beaufschlagbar ist und eine Arbeitsöffnung (64) aufweist, die in einer Ansaugstellung des Ventilkörpers (54) mit der Ansaugöffnung (46) und in einer Ausgabestellung mit der Ausgabeöffnung (48) verbindbar ist,
und wobei die ersten Dichtungsmittel (20) und die zweiten Dichtungsmittel (56) wenigstens teilweise aus Silikon hergestellt sind.

12. Portionierungsanordnung nach Anspruch 11, **dadurch gekennzeichnet, dass** die zweiten Dichtungsmittel (56) wenigstens ein umlaufendes und mehrfach gekrümmtes Dichtungselement (58) aufweisen, das vollständig aus Silikon hergestellt ist.

13. Portionierungsanordnung nach Anspruch 11 oder 12, **dadurch gekennzeichnet, dass** die zweiten Dichtungsmittel (56) wenigstens einen vollständig aus Silikon hergestellten kreisförmigen Dichtungsring (60) aufweisen.

## Claims

1. Dispensing device (2) for receiving and dispensing a foodstuff (4) to a dispenser device (6) with a receiving container (8) which has a circumferential container wall (12) for delimitation of a receiving space (14),
an outlet opening (18) connected to the receiving space (14) for connection to a suction connection (46) of the dispenser device (6),
a floating lid (10) which can be displaced over the receiving space (14),
which has a venting apparatus (26), which in turn has an adjusting element (30) which can be adjusted relative to a lid base body (28) between a closed position, in which it closes a venting opening (40), and a venting position, in which it at least partially opens the venting opening (40),
**characterized in that** the adjusting element (30) is held on the lid base body (28) via a screw connection (32) and can be rotated between the closed position and the venting position via a handle (34) formed by a grab handle of the floating lid (10).

2. Dispensing device according to claim 1, **characterized in that** the floating lid (10) can be displaced vertically over the entire longitudinal extent of the container wall (12).

3. Dispensing device according to claim 1 or 2, **characterized in that** the container wall (12) is formed in a cylindrical shape and the floating lid (10) is formed in a circular shape.

4. Dispensing device according to any one of claims 1 to 3, **characterized in that** the receiving space (14) is delimited at the bottom by a flat container bottom (16) against which the floating lid (10) can be abutted.

5. Dispensing device according to any one of claims 1 to 4, **characterized in that** the floating lid (10) has circumferential first sealing means (20) at the edge for abutment with the container wall (12).

6. Dispensing device according to claim 5, **characterized in that** the first sealing means (20) have at least two sealing rings (22) arranged in parallel.

7. Dispensing device according to claim 5 or 6, **characterized in that** the first sealing means (20) have at least one sealing ring (22) with a cross profile (24).

8. Dispensing device according to any one of claims 5 to 7, **characterized in that** the floating lid (10) has at the edge next to the sealing means (20) a plurality of circumferentially arranged edge elevations (25), which come into abutment with the container wall (12) when the floating lid (10) is in a predefined inclined position relative to the latter.

9. Dispensing device according to any one of claims 1 to 8, **characterized in that** the floating lid (10) can be subjected to an overpressure on an upper side (42).

10. Dispensing device according to any one of claims 1 to 9, **characterized in that** the floating lid (10) is made of a thermoplastic plastic, such as polyoxymethylene (POM).

11. Portioning arrangement (1) for portioning a viscous to solid foodstuff produced by a freezing process with a dispensing device (2) according to any one of claims 1 to 10 for receiving and dispensing the foodstuff (4) to the dispenser device (6) and with a dispenser device (6) which has a portioning cylinder (62), a switching valve (50) with a valve body (54) which can be displaced relative to a valve housing (52) with the interposition of second sealing means (56), a suction opening (46) connected to the outlet opening (18) and a dispensing opening (48) for dispensing the portioned foodstuff, wherein the portioning cylinder (62) can be subjected to a suction pressure and an overpressure via a piston (66) and has a working opening (64) which can be connected to the suction opening (46) in a suction position of the valve body (54) and to the dispensing opening (48) in a dispensing position,
and wherein the first sealing means (20) and the second sealing means (56) are at least partially made of silicone.

12. Portioning arrangement according to claim 11, **characterized in that** the second sealing means (56) have at least one circumferential and multi-curved sealing element (58) which is made entirely of silicone.

13. Portioning arrangement according to claim 11 or 12, **characterized in that** the second sealing means (56) have at least one circular sealing ring (60) made entirely of silicone.

## Revendications

1. Dispositif de distribution (2) pour la réception et la distribution d'un aliment (4) à un dispositif distributeur (6) avec un récipient de réception (8) qui présente une paroi de récipient (12) périphérique pour la délimitation d'un espace de réception (14),
une ouverture de sortie (18) reliée à l'espace de réception (14) pour la liaison avec un raccord d'aspiration (46) du dispositif distributeur (6),
un couvercle flottant (10) déplaçable au-delà de l'espace de réception (14),
qui présente un appareil de ventilation (26) qui présente à son tour un élément de réglage (30) qui est réglable entre une position de fermeture dans laquelle il ferme une ouverture de ventilation (40), et une position de ventilation dans laquelle il libère au moins partiellement l'ouverture de ventilation (40), par rapport à un corps de base de couvercle (28),
**caractérisé en ce que** l'élément de réglage (30) est maintenu par le biais d'une liaison vissée (32) au niveau du corps de base de couvercle (28) et est rotatif par le biais d'un manche (34) formé par une poignée de maintien du couvercle flottant (10) entre la position de fermeture et la position de ventilation.

2. Dispositif de distribution selon la revendication 1, **caractérisé en ce que** le couvercle flottant (10) est déplaçable verticalement sur toute l'étendue longitudinale de la paroi de récipient (12).

3. Dispositif de distribution selon la revendication 1 ou 2, **caractérisé en ce que** la paroi de récipient (12) est réalisée en forme de cylindre et le couvercle flottant (10) est réalisé en forme de cercle.

4. Dispositif de distribution selon l'une quelconque des revendications 1 à 3, **caractérisé en ce que** l'espace de réception (14) est délimité vers le bas par un fond de récipient (16) plat, au niveau duquel peut être posé le couvercle flottant (10).

5. Dispositif de distribution selon l'une quelconque des revendications 1 à 4, **caractérisé en ce que** le couvercle flottant (10) présente de premiers moyens d'étanchéité (20) périphériques au niveau du bord pour l'appui contre la paroi de récipient (12).

6. Dispositif de distribution selon la revendication 5, **caractérisé en ce que** les premiers moyens d'étanchéité (20) présentent au moins deux bagues d'étanchéité (22) agencées parallèlement.

7. Dispositif de distribution selon la revendication 5 ou 6, **caractérisé en ce que** les premiers moyens d'étanchéité (20) présentent au moins une bague d'étanchéité (22) avec un profilé en croix (24).

8. Dispositif de distribution selon l'une quelconque des revendications 5 à 7, **caractérisé en ce que** le couvercle flottant (10) présente sur le bord à côté des moyens d'étanchéité (20) plusieurs élévations de bord (25) agencées sur la périphérie qui viennent en appui contre la paroi de récipient (12) lorsque le couvercle flottant (12) se trouve dans une position oblique prédéfinie par rapport à celui-ci.

9. Dispositif de distribution selon l'une quelconque des revendications 1 à 8, **caractérisé en ce que** le couvercle flottant (10) peut être soumis à une surpression au niveau d'un côté supérieur (42).

10. Dispositif de distribution selon l'une quelconque des revendications 1 à 9, **caractérisé en ce que** le couvercle flottant (10) est fabriqué en une matière thermoplastique telle que du polyoxyméthylène (POM).

11. Agencement de dosage (1) pour le dosage d'un aliment visqueux à solide fabriqué par un processus de congélation avec un dispositif de distribution (2) selon l'une quelconque des revendications 1 à 10 pour la réception et la distribution de l'aliment (4) au dispositif distributeur (6) et avec un dispositif distributeur (6) qui présente un cylindre de dosage (62), une soupape de commutation (50) avec un corps de soupape (54) déplaçable par rapport à un boîtier de soupape (52) en intercalant des seconds moyens d'étanchéité (56), une ouverture d'aspiration (46) reliée à l'ouverture de sortie (18) et une ouverture de distribution (48) pour la distribution de l'aliment dosé, dans lequel le cylindre de dosage (62) peut être soumis à une pression d'aspiration et à une surpression via un piston (66) et présente une ouverture de travail (64) qui peut être reliée à l'ouverture d'aspiration (46) dans une position d'aspiration du corps de soupape (54) et à l'ouverture de distribution (48) dans une position de distribution,
et dans lequel les premiers moyens d'étanchéité (20) et les seconds moyens d'étanchéité (56) sont fabriqués au moins partiellement en silicone.

12. Agencement de dosage selon la revendication 11, **caractérisé en ce que** les seconds moyens d'étanchéité (56) présentent au moins un élément d'étanchéité (58) périphérique et à multiples courbures qui est entièrement fabriqué en silicone.

13. Agencement de dosage selon la revendication 11 ou 12, **caractérisé en ce que** les seconds moyens d'étanchéité (56) présentent au moins une bague d'étanchéité (60) circulaire entièrement fabriquée en silicone.
